# EUROPEAN PATENT SPECIFICATION

(11) **EP 2 153 374 B1**
(45) Date of publication and mention of the grant of the patent: **01.10.2014**
(21) Application number: 07784090.8
(22) Date of filing: 24.05.2007
(51) Int. Cl.: G06K 9/00, G06K 9/36, G06K 9/32, G06K 9/03

(54) **IMAGE PROCESSING METHOD AND APPARATUS**
BILDVERARBEITUNGSVERFAHREN UND -VORRICHTUNG
PROCÉDÉ ET APPAREIL DE TRAITEMENT D'IMAGE

(43) Date of publication of application: 17.02.2010
(73) Proprietor: FotoNation Limited, Ballybrit, Galway (IE)
(72) Inventor: BIGIOI, Petronel, Galway Co. Galway (IE); CORCORAN, Peter, Claregalway Co. Galway (IE); STEINBERG, Eran, San Francisco, CA 94127 (US)
(74) Representative: Boyce, Conor
(86) International application number: PCT/US2007/069593
(87) International publication number: WO 2008/150285

(56) References cited:
- EP-A1- 1 748 378
- WO-A1-2006/062969
- GB-A- 2 447 246
- US-A1- 2003 068 100
- US-A1- 2004 223 649
- US-A1- 2005 041 121
- US-A1- 2006 268 150
- US-A1- 2007 133 901

## Description

### BACKGROUND

The present invention relates to an image processing method and apparatus. One of the most common reasons for an acquired digital photograph to be discarded or spoiled is because one or more of the facial regions in the photograph suffer from photographic defects other than red-eye defects, even though red eye defects can be common in cameras not operating with the advantages of the techniques described, e.g., at US patent 6,407,777, and at US published applications nos. 2005/0140801, 2005/0041121, 2006/0093212, and 2006/0204054. Common examples occur when people move or shake their head; when someone closes their eyes or blinks or someone yawns. Where there are several faces in a photograph, it is sufficient for one face to be "defective" for the whole shot to be spoiled. Although digital cameras allow users to quickly shoot several pictures of the same scene. Typically, such cameras do not provide warnings of facial errors, nor provide a way to correct for such errors without repeating the composition stages (i.e. getting everyone together again in a group) of taking the photograph and re-shooting the scene. This type of problem is particularly difficult with children who are often photographed in unusual spontaneous poses which cannot be duplicated. When such a shot is spoiled because the child moved their head at the moment of acquisition, it is very disappointing for the photographer.

US patent no. 6,301,440 discloses an image acquisition device wherein the instant of exposure is controlled by image content. When a trigger is activated, the image proposed by the user is analysed and imaging parameters are altered to obtain optimum image quality before the device proceeds to take the image. For example, the device could postpone acquisition of the image until every person in the image is smiling.

EP 1,748,378 discloses an image processing method according to the pre-characterizing portion of claim 1.

### SUMMARY OF THE INVENTION

An image processing method characterized according to claim 1 is provided. One or more facial regions are determined in an acquired main image of a scene. The one or more main image facial regions are analyzed for defects and one or more are determined to be defective. A sequence of relatively low resolution images nominally of the scene are acquired. One or more sets of low resolution facial regions in the sequence are analyzed to determine one or more that correspond to a defective main image facial region. At least a portion of the defective main image facial region is corrected with image information from one or more corresponding low resolution facial regions not including a same defect as said portion of said defective main image facial region.

The sequence of low resolution images may be specifically acquired for a time period not including a time for acquiring the main image. The method may also include combining defect-free low resolution facial regions into a combined image, and correcting at least the portion of the defective main image facial region with image information from the combined image.

The time period may include one or more of a time period preceding or a time period following the time for acquiring the main image.

The model may include an Active Appearance Model (AAM).

The main image may be acquired at an exposure level different to the exposure level of the low resolution images. The correcting may include mapping luminance levels of the high quality defect free facial region to luminance levels of the defective facial region.

Sets of low resolution facial regions from the sequence of low resolution images may be stored in an image header file of the main image.

The method may include displaying the main image and/or corrected image, and selected actions may be user-initiated.

The analyzing of the sets may include, prior to the combining in the second method, removing facial regions including faces exceeding an average size of faces in a set of facial regions by a threshold amount from said set of facial regions, and/or removing facial regions including faces with an orientation outside an average orientation of faces in a set of facial regions by a threshold amount from said set of facial regions.

The analyzing of sets may include the following:
applying an Active Appearance Model (AAM) to each face of a set of facial regions;
analyzing AAM parameters for each face of the set of facial regions to provide an indication of facial expression; and
prior to the combining in the second method, removing faces having a defective expression from the set of facial regions.

The analyzing of sets may include the following:
applying an Active Appearance Model (AAM) to each face of a set of facial regions;
analysing AAM parameters for each face of the set of facial regions to provide an indication of facial orientation; and
prior to said combining in the second method, removing faces having an undesirable orientation from said set of facial regions.

The analyzing of facial regions may include applying an Active Appearance Model (AAM) to each facial region, and analyzing AAM parameters for each facial region to provide an indication of facial expression, and/or analyzing each facial region for contrast, sharpness, texture, luminance levels or skin color or combinations thereof, and/or analyzing each facial region to determine if an eye of the facial region is closed, if a mouth of the facial region is open and/or if a mouth of the facial region is smiling.

The method may be such that the correcting, and the combining in the second method, only occur when the set of facial regions exceeds a given number. The method may also include resizing and aligning faces of the set of facial regions, and the aligning may be performed according to cardinal points of faces of the set of facial regions.

The correcting may include blending and/or infilling a corrected region of the main image with the remainder of the main image.

### BRIEF DESCRIPTION OF THE DRAWINGS

Embodiments will now be described, by way of example, with reference to the accompanying drawings, in which:
Figure 1 is a block diagram of an image processing apparatus operating in accordance with an embodiment of the present invention;
Figure 2 is a flow diagram of an image processing method according to a preferred embodiment of the present invention; and
Figures 3 and 4 show exemplary sets of images to which an active appearance model has been applied.

### DETAILED DESCRIPTION OF THE PREFERRED EMBODIMENTS

Certain embodiments can be implemented with a digital camera which incorporates (i) a face tracker operative on a preview image stream; (ii) a super-resolution processing module configured to create a higher resolution image from a composite of several low-resolution images; and (iii) a facial region quality analysis module for determining the quality of facial regions.

Preferably, super-resolution is applied to preview facial regions extracted during face tracking.

The embodiments enable the correction of errors or flaws in the facial regions of an acquired image within a digital camera using preview image data and employing super-resolution techniques.

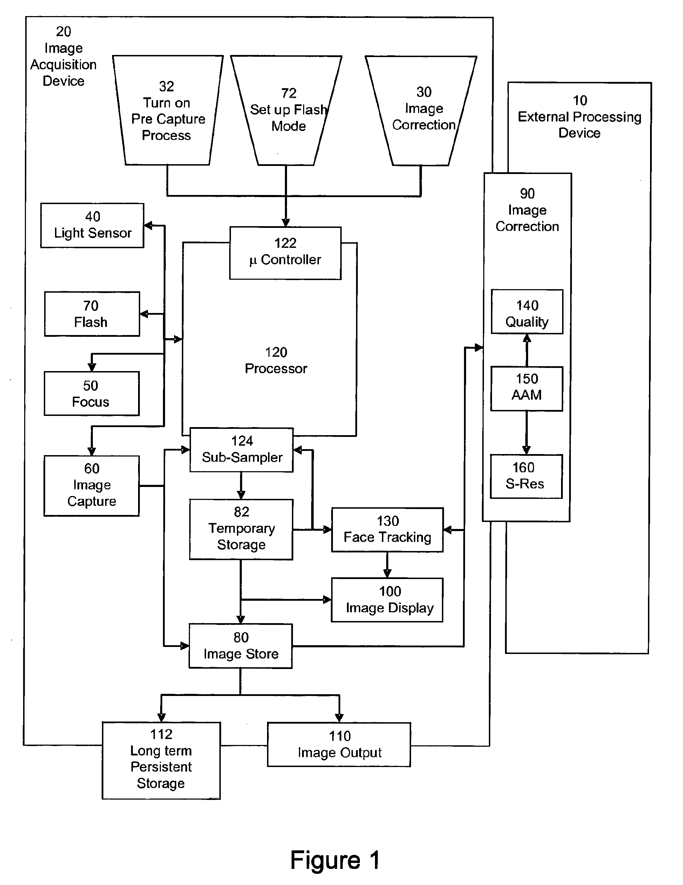

Figure 1 is a block diagram of an image acquisition device 20, which in the present embodiment is a portable digital camera, operating in accordance with certain embodiments. It will be appreciated that many of the processes implemented in the digital camera are implemented in or controlled by software operating on a microprocessor, central processing unit, controller, digital signal processor and/or an application specific integrated circuit, collectively depicted as processor 120. All user interface and control of peripheral components such as buttons and display is controlled by a microcontroller 122.

In operation, the processor 120, in response to a user input at 122, such as half pressing a shutter button (pre-capture mode 32), initiates and controls the digital photographic process. Ambient light exposure is determined using a light sensor 40 in order to automatically determine if a flash is to be used. The distance to the subject is determined using a focusing mechanism 50 which also focuses the image on an image capture device 60. If a flash is to be used, processor 120 causes a flash device 70 to generate a photographic flash in substantial coincidence with the recording of the image by the image capture device 60 upon full depression of the shutter button. The image capture device 60 digitally records the image in colour. The image capture device is known to those familiar with the art and may include a CCD (charge coupled device) or CMOS to facilitate digital recording. The flash may be selectively generated either in response to the light sensor 40 or a manual input 72 from the user of the camera. The high resolution image recorded by image capture device 60 is stored in an image store 80 which may comprise computer memory such a dynamic random access memory or a non-volatile memory. The camera is equipped with a display 100, such as an LCD, both for displaying preview images and displaying a user interface for camera control software.

In the case of preview images which are generated in the pre-capture mode 32 with the shutter button half-pressed, the display 100 can assist the user in composing the image, as well as being used to determine focusing and exposure. Temporary storage 82 is used to store one or plurality of the stream of preview images and can be part of the image store 80 or a separate component. The preview image is usually generated by the image capture device 60. For speed and memory efficiency reasons, preview images usually have a lower pixel resolution than the main image taken when the shutter button is fully depressed, and are generated by sub-sampling a raw captured image using software 124 which can be part of the general processor 120 or dedicated hardware or combination thereof.

In the present embodiment, a face detection and tracking module 130 such as described in US Application No. 11/464,083, filed August 11, 2006, is operably connected to the sub-sampler 124 to control the sub-sampled resolution of the preview images in accordance with the requirements of the face detection and tracking module. Preview images stored in temporary storage 82 are available to the module 130 which records the locations of faces tracked and detected in the preview image stream. In one embodiment, the module 130 is operably connected to the display 100 so that boundaries of detected and tracked face regions can be superimposed on the display around the faces during preview.

In the embodiment of Figure 1, the face tracking module 130 is arranged to extract and store tracked facial regions at relatively low resolution in a memory buffer such as memory 82 and possibly for storage as meta-data in an acquired image header stored in memory 80. Where multiple face regions are tracked, a buffer is established for each tracked face region. These buffers are of finite size (10-20 extracted face regions in a preferred embodiment) and generally operate on a first-in-first-out (FIFO) basis.

According to the preferred embodiment, the device 20 further comprises an image correction module 90. Where the module 90 is arranged for off-line correction of acquired images in an external processing device 10, such as a desktop computer, a colour printer or a photo kiosk, face regions detected and/or tracked in preview images are preferably stored as meta-data within the image header. However, where the module 90 is implemented within the camera 20, it can have direct access to the buffer 82 where preview images and/or face region information is stored.

In this embodiment, the module 90 receives the captured high resolution digital image from the store 80 and analyzes it to detect defects. The analysis is performed as described in the embodiments to follow. If defects are found, the module can modify the image to remove the defect. The modified image may be either displayed on image display 100, saved on a persistent storage 112 which can be internal or a removable storage such as CF card, SD card or the like, or downloaded to another device via image output means 110 which can be tethered or wireless. The module 90 can be brought into operation either automatically each time an image is captured, or upon user demand via input 30. Although illustrated as a separate item, where the module 90 is part of the camera, it may be implemented by suitable software on the processor 120.

The main components of the image correction module include a quality module 140 which is arranged to analyse face regions from either low or high resolution images to determine if these include face defects. A super-resolution module 160 is arranged to combine multiple low-resolution face regions of the same subject generally with the same pose and a desirable facial expression to provide a high quality face region for use in the correction process. In the present embodiment, an active appearance model (AAM) module 150 produces AAM parameters for face regions again from either low or high resolution images.

AAM modules are well known and a suitable module for the present embodiment is disclosed in "Fast and Reliable Active Appearance Model Search for 3-D Face Tracking", F Dornaika and J Ahlberg, IEEE Transactions on Systems, Man, and Cybernetics-Part B: Cybernetics, Vol. 34, No. 4, pg 1838-1853, August 2004, although other models based on the original paper by TF Cootes et al "Active Appearance Models" Proc. European Conf. Computer Vision, 1998, pp 484-498 could also be employed.

The AAM module 150 can preferably cooperate with the quality module 140 to provide pose and/or expression indicators to allow for selection of images in the analysis and optionally in the correction process described below. Also, the AAM module 150 can preferably cooperate with the super-resolution module 160 to provide pose indicators to allow for selection of images in the correction process, again described in more detail below.

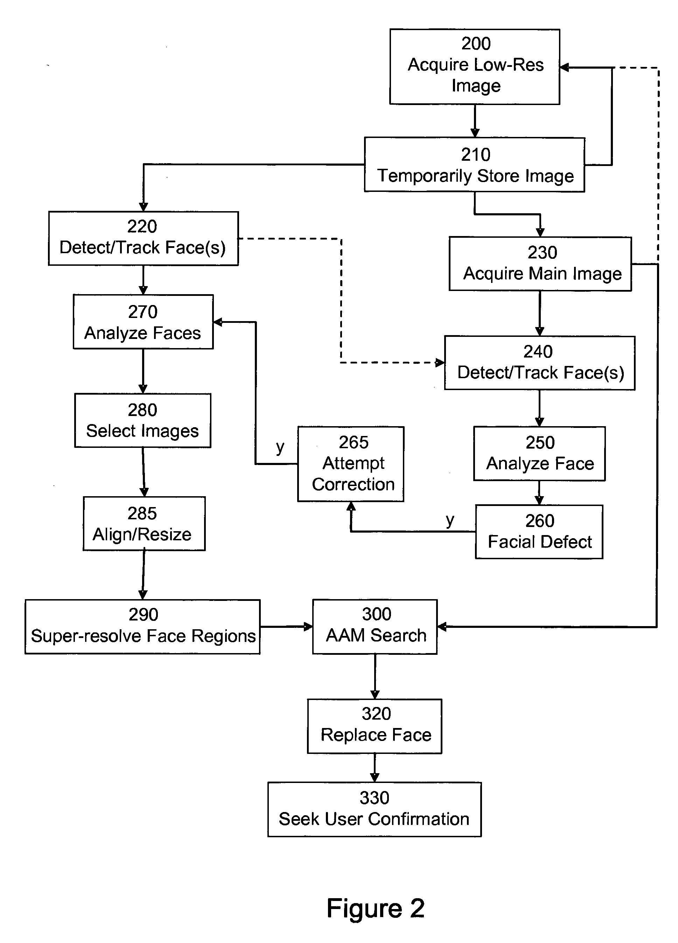

Referring now to Figure 2, which illustrates an exemplary processing flow for certain embodiments, when a main image is acquired, step 230, the location and size of any detected/tracked face region(s) in the main acquired image (high resolution) will be known by the module 90 from the module 130. Face detection can either be applied directly on the acquired image and/or information for face regions previously detected and/or tracked in the preview stream can be used for face detection in the main image (indicated by the dashed line extending from step 220). At step 250, the facial region quality analysis module 140 extracts and analyzes face regions tracked/detected at step 240 in the main image to determine the quality of the acquired face regions. For example, the module 140 can apply a preliminary analysis to measure the overall contrast, sharpness and/or texture of detected face region(s). This can indicate if the entire face region was blurred due to motion of the subject at the instant of acquisition. If a facial region is not sufficiently well defined then it is marked as a blur defect. In additional or alternatively, another stage of analysis can focus on the eye region of the face(s) to determine if one, or both eyes were fully or partially closed at the instant of acquisition and the face region is categorized accordingly. As mentioned previously, if AAM analysis is performed on the image, then the AAM parameters can be used to indicate whether a subject's eyes are open or not. It should be noted that in the above analyses, the module 90 detects blink or blur due to localized movement of the subject as opposed to global image blur.

Another or alternative stage of analysis focuses on the mouth region and determines if the mouth is opened in a yawn or indeed not smiling; again the face region is categorized accordingly. As mentioned previously, if AAM analysis is performed on the image, then the AAM parameters can be used to indicate the state of a subject's mouth.

Other exemplary tests might include luminance levels, skin colour and texture histograms, abrupt facial expressions (smiling, frowning) which may cause significant variations in facial features (mouth shape, furrows in brow). Specialized tests can be implemented as additional or alternative image analysis filters, for example, a Hough transform filter could be used to detect parallel lines in a face region above the eyes indicating a "furrowed brow". Other image analysis techniques such as those known in the art and as disclosed in US 6,301,440 can also be employed to categorise the face region(s) of the main image.

After this analysis, it is decided (for each face region) if any of these defects occurred, step 260, and the camera or external processing device user can be offered the option of repairing the defect based on the buffered (low resolution) face region data, step 265.

When the repair option is actuated by the user, each of the low-resolution face regions is first analyzed by the face region quality analyzer, step 270. As this analysis is operative on lower resolution images acquired and stored at steps 200/210, the analysis may vary from the analysis of face regions in the main acquired image at step 250. Nevertheless the analysis steps are similar in that each low-resolution face region is analyzed to determine if it suffers from image defects in which case it should not be selected at step 280 to reconstruct the defective face region(s) in the main image. After this analysis and selection, if there are not enough "good" face regions corresponding to a defective face region available from the stream of low-resolution images, an indication is passed to the user that image repair is not viable. Where there are enough "good" face regions, these are passed on for resizing and alignment, step 285.

This step re-sizes each face region and performs some local alignment of cardinal face points to correct for variations in pose and to ensure that each of the low-resolution face regions overlap one another as uniformly as is practical for later processing.

It should also be noted that as these image regions were captured in sequence and over a relatively short duration, it is expected that they are of approximately the same size and orientation. Thus, image alignment can achieved using cardinal face points, in particular those relating to the eyes, mouth, lower face (chin region) which is normally delineated by a distinct boundary edge, and the upper face which is normally delineated by a distinctive hairline boundary. Some slight scaling and morphing of extracted face regions may be used to achieve reasonable alignment, however a very precise alignment of these images is not desirable as it would undermine the super-resolution techniques which enable a higher resolution image to be determined from several low-resolution images.

It should be noted that the low-resolution images captured and stored at steps 200/210 can be captured either from a time period before capturing the main image or from a period following capture of the main image (indicated by the dashed line extending from step 230). For example, it may be possible to capture suitable defect free low resolution images in a period immediately after a subject has stopped moving/blinking etc following capture of the main image.

This set of selected defect free face regions is next passed to a super-resolution module 160 which combines them using known super-resolution methods to yield a high resolution face region which is compatible with a corresponding region of the main acquired image.

Now the system has available to it, a high quality defect-free combination face region and a high resolution main image with a generally corresponding defective face region.

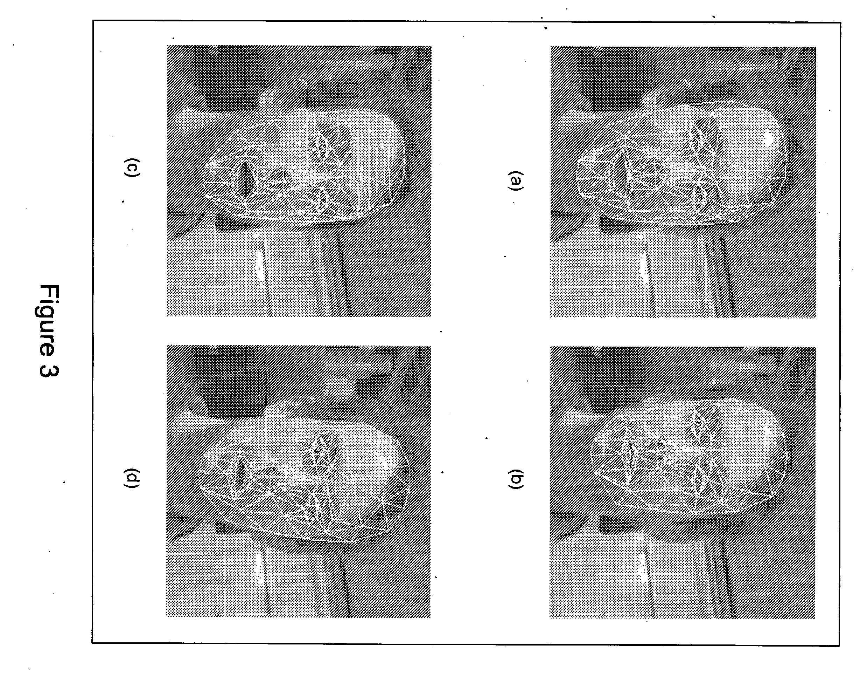

If this has not already been performed for quality analysis, the defective face region(s) as well as the corresponding high quality defect-free face region are subjected to AAM analysis, step 300. Referring now to Figure 3(a) to (d), which illustrates some images including face regions which have been processed by the AAM module 150. In this case, the model represented by the wire frame superimposed on the face is tuned for a generally forward facing and generally upright face, although separate models can be deployed for use with inclined faces or faces in profile. Once the model has been applied, it returns a set of coordinates for the vertices of the wire frame; as well as texture parameters for each of the triangular elements defined by adjacent vertices. The relative coordinates of the vertices as well as the texture parameters can in turn provide indicators linked to the expression and inclination of the face which can be used in quality analysis as mentioned above.

It will therefore be seen that the AAM module 150 can also be used in the facial region analysis steps 250/270 to provide in indicator of whether a mouth or eyes are open i.e. smiling and not blinking; and also to help determine in steps 285/290 implemented by the super-resolution module 160 whether facial regions are similarly aligned or inclined for selection before super-resolution.

So, using Figure 3(a) as an example of a facial region produced by super-resolution of low resolution images, it is observed that the set of vertices comprising the periphery of the AAM model define a region which can be mapped on to corresponding set of peripheral vertices of Figures 3(b) to Figure 3(d) where these images have been classified and confirmed by the user as defective facial regions and candidates for correction.

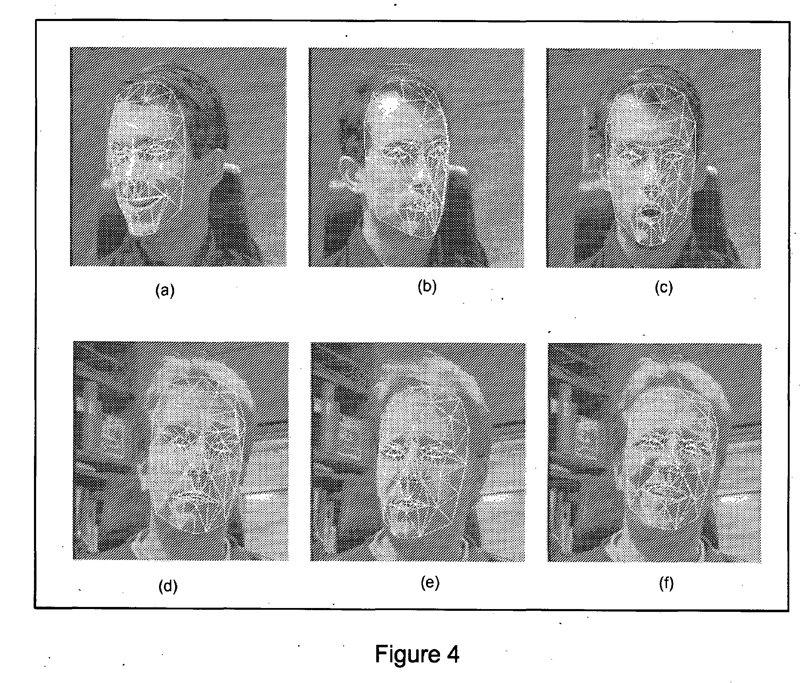

In relation to Figure 4, the model parameters for Figures 4(a) or 4(b) which might represent super-resolved defect free face regions could indicate that the left-right orientation of these face regions would not make them suitable candidates for correcting the face region of Figure 4(c). Similarly, the face region of Figure 4(f) could be a more suitable candidate than the face region of Figure 4(e) for correcting the face region of Figure 4(d).

In any case, if the super-resolved face region is deemed to be compatible with the defective face region, information from the super-resolved face region can be pasted onto the main image by any suitable technique to correct the face region of the main image, step 320. The corrected image can be viewed and depending on the nature of the mapping, it can be adjusted by the user, before being finally accepted or rejected, step 330. So for example, where dithering around the periphery of the corrected face region is used as part of the correction process, step 320, the degree of dithering can be adjusted. Similarly, luminance levels or texture parameters in the corrected regions can be manually adjusted by the user, or indeed any parameter of the corrected region and the mapping process can be manually adjusted prior to final approval or rejection by the user.

While AAM provides one approach to determine the outside boundary of a facial region, other well-known image processing techniques such as edge detection, region growing and skin color analysis may be used in addition or as alternatives to AAM. However, these may not have the advantage of also being useful in analysing a face region for defects and/or for pose information. Other techniques which can prove useful include applying foreground/background separation to either the low-resolution images or the main image prior to running face detection to reduce overall processing time by only analysing foreground regions and particularly foreground skin segments. Local colour segmentation applied across the boundary of a foreground/background contour can assist in further refining the boundary of a facial region.

Once the user is satisfied with the placement of the reconstructed face region they may choose to merge it with the main image; alternatively, if they are not happy they can cancel the reconstruction process. These actions are typically selected through buttons on the camera user interface where the correction module is implemented on the acquisition device 20.

As practical examples let us consider an example of the system used to correct an eye defect. An example may be used of a defect where one eye is shut in the main image frame due to the subject "blinking" during the acquisition. Immediately after the main image acquisition the user is prompted to determine if they wish to correct this defect. If they confirm this, then the camera begins by analyzing a set of face regions stored from preview images acquired immediately prior to the main image acquisition. It is assumed that a set of, say, 20 images was saved from the one second period immediately prior to image acquisition. As the defect was a blinking eye, the initial testing determines that the last, say, 10 of these preview images are not useful. However the previous 10 images are determined to be suitable. Additional testing of these images might include the determination of facial pose, eliminating images where the facial pose varies more than 5% from the averaged pose across all previews; a determination of the size of the facial region, eliminating images where the averaged size varies more than 25% from the averaged size across all images. The reason the threshold is higher for the latter test is that it is easier to rescale face regions than to correct for pose variations.

In variations of the above described embodiment, the regions that are combined may include portions of the background region surrounding the main face region. This is particularly important where the defect to be corrected in the main acquired image is due to face motion during image exposure. This will lead to a face region with a poorly defined outer boundary in the main image and the super-resolution image which is superimposed upon it typically incorporates portions of the background for properly correcting this face motion defect. A determination of whether to include background regions for face reconstruction can be made by the user, or may be determined automatically after a defect analysis is performed on the main acquired image. In the latter case, where the defect comprises blurring due to face motion, then background regions will normally be included in the super-resolution reconstruction process. In an alternative embodiment, a reconstructed background can be created using either (i) region infilling techniques for a background region of relatively homogeneous colour and texture characteristics, or (ii) directly from the preview image stream using image alignment and super-resolution techniques. In the latter case the reconstructed background is merged into a gap in the main image background created by the separation of foreground from background; the reconstructed face region is next merged into the separated foreground region, specifically into the facial region of the foreground and finally the foreground is re-integrated with the enhanced background region.

After applying super-resolution methods to create a higher resolution face region from multiple low-resolution preview images, some additional scaling and alignment operations are normally involved. Furthermore, some blending, infilling and morphological operations may be used in order to ensure a smooth transition between the newly constructed super-resolution face region and the background of the main acquired image. This is particularly the case where the defect to be corrected is motion of the face during image exposure. In the case of motion defects it may also be desirable to reconstruct portions of the image background prior to integration of the reconstructed face region into the main image.

It is also be desirable to match the overall luminance levels of the new face region with that of the old face region, and this is best achieved through a matching of the skin colour between the old region and the newly constructed one. Preview images are acquired under fixed camera settings and can be over/under exposed. This may not be fully compensated for during the super-resolution process and may involve additional image processing operations.

While the above described embodiments have been directed to replacing face regions within an image, it will be seen that AAM can be used to model any type of feature of an image. So in certain embodiments, the patches to be used for super-resolution reconstruction may be subregions within a face region. For example, it may be desired to reconstruct only a segment of the face regions, such as an eye or mouth region, rather than the entire face region. In such cases, a determination of the precise boundary of the sub-region is of less importance as the sub-region will be merged into a surrounding region of substantially similar colour and texture (i.e. skin colour and texture). Thus, it is sufficient to center the eye regions to be combined or to align the corners of the mouth regions and to rely on blending the surrounding skin coloured areas into the main image.

In one or more of the above embodiments, separate face regions may be individually tracked (see also US application 11/464,083). Regions may be tracked from frame-to-frame. Preview or post-view face regions can be extracted, analyzed and aligned with each other and with the face region in the main or final acquired image. In addition, in techniques according to certain embodiments, faces may be tracked between frames in order to find and associate smaller details between previews or post-views on the face. For example, a left eye from Joe's face in preview N may be associated with a left eye from Joe's face in preview N+1. These may be used together to form one or more enhanced quality images of Joe's eye. This is advantageous because small features (an eye, a mouth, a nose, an eye component such as an eye lid or eye brow, or a pupil or iris, or an ear, chin, beard, mustache, forehead, hairstyle, etc.. are not as easily traceable between frames as larger features (and their absolute or relative positional shifts between frames tend to be more substantial relative to their size.

In methods that may be performed according to preferred embodiments herein and that may have been described above and/or claimed below, the operations have been described in selected typographical sequences. However, the sequences have been selected and so ordered for typographical convenience and are not intended to imply any particular order for performing the operations.

## Claims

1. An image processing method comprising:
a) acquiring (230) a main image of a scene;
b) determining (240) one or more facial regions in said main image;
c) analysing (250, 260) said one or more facial regions to determine if any one of said facial regions includes a defect comprising a low quality portion of the facial region of the image;
d) acquiring (200) a sequence of preview images nominally of said scene for a time period not including a time for acquiring said main image;
e) determining (220) one or more sets of facial regions in said sequence ofpreview images;
f) analysing (270) said sets of facial regions to determine if any facial regions of a set corresponding to a defective facial region of said main image include a defect;
**characterized by**:
g) combining (290) defect free facial regions of said corresponding set to provide a high quality defect free facial region; and
h) correcting (320) at least a portion of any defective facial regions of said main image with image information from a corresponding high quality defect free facial region, said correcting including:
applying (300) a model comprising a plurality of vertices defining a periphery of a facial region to each high quality defect free facial region and a corresponding defective facial region; and
mapping pixels of said high quality defect free facial region to said defective facial region according to the correspondence of vertices for said respective regions.

2. A method according to claim 1 wherein said main image is acquired at an exposure level different to the exposure level of said preview images and wherein said correcting comprises mapping luminance levels of said high quality defect free facial region to luminance levels of said defective facial region.

3. A method according to claim 1 comprising storing sets of facial regions from said sequence of preview images in an image header file of said main image.

4. A method according to claim 1, wherein said step f) of analysing further comprises:
prior to said combining, removing facial regions including faces exceeding an average size of faces in a set of facial regions by a threshold amount from said set of facial regions.

5. A method according to claim 1, wherein said step f) of analysing further comprises:
prior to said combining, removing facial regions including faces with an orientation outside an average orientation of faces in a set of facial regions by a threshold amount from said set of facial regions.

6. A method according to claim 1 wherein said step f) of analysing comprises:
applying (300) an Active Appearance Model (AAM) to each face of a set of facial regions;
analysing AAM parameters for each face of the set of facial regions to provide an indication either of facial expression or orientation; and
prior to said combining, removing faces having a defective expression or an undesirable orientation from said set of facial regions.

7. A method according to claim 1 wherein said step c) of analysing comprises:
applying an Active Appearance Model (AAM) to each facial region; and
analysing AAM parameters for each facial region to provide an indication of facial expression.

8. A method according to claim 1 wherein said step c) of analysing comprises: analysing each facial region for one or more of: contrast, sharpness, texture, luminance levels or skin color.

9. A method according to claim 1 wherein said step c) of analysing comprises: analysing each facial region to determine if either any eyes of said facial region are closed; any mouth of said facial region is open or any mouth of said facial region is smiling.

10. A method according to claim 1 wherein steps g) and h) are performed only when said set of facial regions exceeds a given number.

11. A method according to claim 1 comprising: prior to said combining, resizing and aligning (285) faces of said set of facial regions, said aligning being performed according to cardinal points of faces of said set of facial regions.

12. A method according to claim 1 wherein said correcting further comprises one or more of:
blending; or infilling a corrected region of said main image with the remainder of said main image.

13. An image processing apparatus comprising:
a) means (20) for acquiring a main image of a scene;
b) means (130) for determining one or more facial regions in said main image;
c) means (140) for analysing said one or more facial regions to determine if any one of said facial regions includes a defect comprising a low quality portion of the facial region of the image;
d) means for acquiring a sequence of preview images nominally of said scene for a time period not including a time for acquiring said main image;
e) means (130) for determining one or more sets of facial regions in said sequence of preview images;
f) means (140) for analysing said sets of facial regions to determine if any facial regions of a set corresponding to a defective facial region of said main image include a defect;
**characterized by**:
g) means (160) for combining defect free facial regions of said corresponding set to provide a high quality defect free facial region; and
h) means (90) for correcting at least a portion of any defective facial regions of said main image with image information from a corresponding high quality defect free facial region including:
means (150) for applying a model comprising a plurality of vertices defining a periphery of a facial region to each high quality defect free facial region and a corresponding defective facial region; and
means for mapping pixels of said high quality defect free facial region to said defective facial region according to the correspondence of vertices for said respective regions.

## Patentansprüche

1. Ein Bildverarbeitungsverfahren mit den folgenden Schritten:
a) Erfassen (230) eines Haupt-Bildes einer Szene;
b) Bestimmen (240) von einem oder mehreren Gesichtsbereichen in dem Haupt-Bild;
c) Analysieren (250, 260) des einen oder der mehreren Gesichts-Bereiche, um festzustellen, ob irgendeines der Gesichts-Bereiche einen Defekt einschließt, der einen eine niedrige Qualität aufweisenden Teil des Gesichts-Bereiches des Bildes einschließt;
d) Erfassen (200) einer Folge von Vorschau-Bildern nominell von der Szene für eine Zeitperiode, die nicht die Zeit des Erfassens des Haupt-Bildes einschließt;
e) Bestimmen (220) von einem oder mehreren Sätzen von Gesichts-Bereichen in der Folge von Vorschau-Bildern;
f) Analysieren (270) der Sätze von Gesichts-Bereichen, um festzustellen, ob irgendwelche Gesichts-Bereiche eines Satzes, die einem defekten Gesichts-Bereich des Haupt-Bildes entsprechen, einen Defekt einschließen; **dadurch gekennzeichnet** durch die folgenden Schritte:
g) Kombinierten (290) defektfreier Gesichts-Bereiche des entsprechenden Satzes, um einen eine hohe Qualität aufweisenden defektfreien Gesichts-Bereich zu schaffen; und
h) Korrigieren (320) von zumindest einen Teil irgendeines defekten Gesichts-Bereiches des Haupt-Bildes mit Bildinformation von einem entsprechenden eine hohe Qualität aufweisenden defektfreien Gesichts-Bereich, wobei die Korrektur Folgendes einschließt:
Anwenden (300) eines Modells, das eine Vielzahl von Scheitelpunkten umfasst, die einen Umfang eines Gesichts-Bereiches definieren, auf jeden eine hohe Qualität aufweisenden defektfreien Gesichts-Bereich und einen entsprechenden defekten Gesichts-Bereich; und Abbilden von Pixeln des eine hohe Qualität aufweisenden defektfreien Gesichts-Bereiches auf den defekten Gesichts-Bereich gemäß der Korrespondenz der Scheitelpunkte für die jeweiligen Bereiche.

2. Ein Verfahren nach Anspruch 1, bei dem das Haupt-Bild mit einem Belichtungspegel erfasst wird, der von dem Belichtungspegel der Vorschau-Bilder verschieden ist, und bei dem die Korrektur die Abbildung von Luminanz-Pegeln des eine hohe Qualität aufweisenden defektfreien Gesichts-Bereiches auf die Luminanz-Pegeln des defekten Gesichts-Bereiches umfasst.

3. Ein Verfahren nach Anspruch 1, das das Speichern von Sätzen von Gesichts-Bereichen von der Folge von Vorschau-Bildern in einer Bild-Kopfteil-Datei des Haupt-Bildes umfasst.

4. Ein Verfahren nach Anspruch 1, bei dem der Schritt f) des Analysierens weiterhin vor dem Kombinieren die Entfernung von Gesichts-Bereichen umfasst, die eine durchschnittliche Größe von Gesichtern in einem Satz von Gesichts-Bereichen um einen Schwellenwert-Betrag von dem Satz von Gesichts-Bereichen übersteigen.

5. Ein Verfahren nach Anspruch 1, bei dem der Schritt f) des Analysierens weiterhin Folgendes umfasst: vor dem Kombinierten, Entfernen von Gesichts-Bereichen, die Gesichter mit einer Ausrichtung außerhalb einer mittleren Ausrichtung von Gesichtern in einem Satz von Gesichts-Bereichen um einen Schwellenwert gegenüber dem Satz von Gesichts-Bereichen einschließen.

6. Ein Verfahren nach Anspruch 1, bei dem der Schritt f) des Analysierens Folgendes umfasst: Anwenden (300) eines aktiven Aussehens-Modells (AAM) auf jedes Gesicht eines Satzes von Gesichts-Bereichen; Analysieren der AAM-Parameter für jedes Gesicht des Satzes von Gesichts-Bereichen zur Schaffung einer Anzeige entweder eines Gesichts-Ausdruckes oder einer Gesichts-Ausrichtung; und
vor dem Kombinieren, Entfernen von Gesichtern, die einen fehlerhaften Ausdruck oder eine unerwünschte Ausrichtung gegenüber dem Satz von Gesichts-Bereichen aufweisen.

7. Ein Verfahren nach Anspruch 1, bei dem der Schritt c) des Analysierens Folgendes umfasst: Anwenden eines aktiven Aussehens-Modells (AAM) auf jeden Gesichtsbereich; und
Analysieren der AAM-Parameter für jeden Gesichts-Bereich zur Schaffung einer Anzeige eines Gesichts-Ausdruckes.

8. Ein Verfahren nach Anspruch 1, bei dem Schritt c) des Analysierens Folgendes umfasst: Analysieren jedes Gesichts-Bereiches auf eines oder mehrere von: Kontrast, Schärfe, Textur, Luminanz-Pegel oder Hautfarbe.

9. Ein Verfahren nach Anspruch 1, bei dem der Schritt c) des Analysierens Folgendes umfasst: Analysieren jedes Gesichts-Bereiches, um festzustellen, ob irgendein Auge des Gesichts-Bereiches geschlossen ist; irgendein Mund des Gesichts-Bereiches offen ist, oder irgendein Mund des Gesichts-Bereiches lächelt.

10. Ein Verfahren nach Anspruch 1, bei dem die Schritte g) und h) nur dann ausgeführt werden, wenn der Satz von Gesichts-Bereichen eine vorgegebene Anzahl übersteigt.

11. Ein Verfahren nach Anspruch 1, das Folgendes umfasst: vor dem Kombinieren, Ändern der Größe und Ausrichtung (285) von Gesichtern des Satzes von Gesichts-Bereichen, wobei die Ausrichtung entsprechend zu Kardinal-Punkten von Gesichtern des Satzes von Gesichts-Bereichen durchgeführt wird.

12. Ein Verfahren nach Anspruch 1, bei dem die Korrektur weiterhin eines oder mehreres von: Mischen; Einfüllen eines korrigierten Bereiches des Haupt-Bildes mit dem Rest des Haupt-Bildes umfasst.

13. Eine Bildverarbeitungsvorrichtung mit:
a) Einrichtungen (20) zum Erfassen eines Haupt-Bildes einer Szene;
b) Einrichtungen (130) zur Bestimmung eines oder mehrerer Gesichts-Bereiche in dem Haupt-Bild;
c) Einrichtungen (140) zum Analysieren des einen oder der mehreren Gesichts-Bereiche, um Festzustellen, ob irgendeines der Gesichts-Bereiche einen Defekt einschließt, der einen eine niedrige Qualität aufweisenden Teil des Gesichts-Bereiches des Bildes umfasst;
d) Einrichtungen zur Verfassung einer Folge von Vorschau-Bildern nominell der Szene für eine Zeitperiode, die nicht eine Zeit zum Erfassen des Haupt-Bildes einschließt;
c) Einrichtungen (130) zur Bestimmung von einem oder mehreren Sätzen von Gesichts-Bereichen in der Folge von Vorschau-Bildern;
f) Einrichtungen (140) zum Analysieren der Sätze von Gesichts-Bereichen, um zu bestimmen, ob irgendeiner der Gesichts-Bereiche eines Satzes einen defekten Gesichts-Bereich des Haupt-Bildes einen Fehler einschließt; **gekennzeichnet durch**:
g) Einrichtungen (160) zum Kombinieren von defektfreien Gesichts-Bereich des entsprechenden Satzes, um einen eine hohe Qualität aufweisenden defektfreien Gesichts-Bereich zu schaffen; und
h) Einrichtungen (90) zum Korrigieren von zumindest einem Teil irgendeines defekten Gesichts-Bereiches des Haupt-Bildes mit Bildinformation von einem entsprechenden eine hohe Qualität aufweisenden defektfreien Gesichts-Bereich, unter Einschluss von: Einrichtungen (150) zum Anwenden eines Modells, das eine Vielzahl von Scheitelpunkten umfasst, die einen Umfang eines Gesichts-Bereiches definierten, auf jeden eine hohe Qualität aufweisenden defektfreien Gesichts-Bereich und einen entsprechenden defekten Gesichts-Bereich; und
Einrichtungen zum Abbilden von Pixeln des eine hohe Qualität aufweisenden defekt-freien Gesichts-Bereiches auf den defekten Gesichts-Bereich gemäß der Entsprechung von Scheitelpunkten für jeweilige Bereiche.

## Revendications

1. Procédé de traitement d'image comprenant :
a) l'acquisition (230) d'une image principale d'une scène ;
b) la détermination (240) d'une ou plusieurs régions faciales dans ladite image principale ;
c) l'analyse (250, 260) desdites une ou plusieurs régions faciales afin de déterminer si l'une quelconque desdites régions faciales comporte un défaut comprenant une partie de faible qualité de la région faciale de l'image ;
d) l'acquisition (200) d'une séquence d'images de prévisualisation nominalement de ladite scène pendant une période de temps ne comprenant pas un temps pour acquérir ladite image principale ;
e) la détermination (220) d'un ou plusieurs ensembles de régions faciales dans ladite séquence d'images de prévisualisation ;
f) l'analyse (270) desdits ensembles de régions faciales afin de déterminer si des régions faciales d'un ensemble correspondant à une région faciale défectueuse de ladite image principale comportent un défaut ;
**caractérisé par** :
g) la combinaison (290) de régions faciales exemptes de défaut dudit ensemble correspondant afin de fournir une région faciale exempte de défaut de haute qualité ; et
h) la correction (320) d'au moins une partie de toutes régions faciales défectueuses de ladite image principale avec des informations d'image à partir d'une région faciale exempte de défaut de haute qualité correspondante, ladite correction comprenant :
l'application (300) d'un modèle comprenant une pluralité de sommets définissant une périphérie d'une région faciale à chaque région faciale exempte de défaut de haute qualité et une région faciale défectueuse correspondante ; et
le mappage de pixels de ladite région faciale exempte de défaut de haute qualité à ladite région faciale défectueuse en fonction de la correspondance de sommets pour lesdites régions respectives.

2. Procédé selon la revendication 1, dans lequel ladite image principale est acquise à un niveau d'exposition différent du niveau d'exposition desdites images de prévisualisation et dans lequel ladite correction comprend le mappage de niveaux de luminance de ladite région faciale exempte de défaut de haute qualité à des niveaux de luminance de ladite région faciale défectueuse.

3. Procédé selon la revendication 1, comprenant le stockage d'ensembles de régions faciales à partir de ladite séquence d'images de prévisualisation dans un fichier d'en-tête d'image de ladite image principale.

4. Procédé selon la revendication 1, dans lequel ladite étape f) d'analyse comprend en outre :
avant ladite combinaison, la suppression de régions faciales comportant des visages dépassant une taille moyenne de visages dans un ensemble de régions faciales d'une quantité seuil dudit ensemble de régions faciales.

5. Procédé selon la revendication 1, dans lequel ladite étape f) d'analyse comprend en outre :
avant ladite combinaison, la suppression de régions faciales comportant des visages avec une orientation en dehors d'une orientation moyenne de visages dans un ensemble de régions faciales d'une quantité seuil dudit ensemble de régions faciales.

6. Procédé selon la revendication 1, dans lequel ladite étape f) d'analyse comprend :
l'application (300) d'un modèle d'apparence active (AAM, *Active Appearance Model*) à chaque visage d'un ensemble de régions faciales ;
l'analyse de paramètres AAM pour chaque visage de l'ensemble de régions faciales afin de fournir une indication soit de l'expression faciale soit de l'orientation ; et
avant ladite combinaison, la suppression de visages ayant une expression défectueuse ou une orientation indésirable dudit ensemble de régions faciales.

7. Procédé selon la revendication 1, dans lequel ladite étape c) d'analyse comprend :
l'application d'un modèle d'apparence active (AAM) à chaque région faciale ; et
l'analyse de paramètres AAM pour chaque région faciale afin de fournir une indication de l'expression faciale.

8. Procédé selon la revendication 1, dans lequel ladite étape c) d'analyse comprend : l'analyse de chaque région faciale pour un ou plusieurs parmi : le contraste, la netteté, la texture, les niveaux de luminance ou la couleur de peau.

9. Procédé selon la revendication 1, dans lequel ladite étape c) d'analyse comprend : l'analyse de chaque région faciale afin de déterminer si des yeux de ladite région faciale sont fermés ; une bouche de ladite région faciale est ouverte ou une bouche de ladite région faciale sourit.

10. Procédé selon la revendication 1, dans lequel les étapes g) et h) sont effectuées uniquement lorsque ledit ensemble de régions faciales dépasse un nombre donné.

11. Procédé selon la revendication 1, comprenant : avant ladite combinaison, le redimensionnement et l'alignement (285) de visages dudit ensemble de régions faciales, ledit alignement étant effectué en fonction de points cardinaux de visages dudit ensemble de régions faciales.

12. Procédé selon la revendication 1, dans lequel ladite correction comprend en outre un ou plusieurs parmi : le mélange ; ou le remplissage d'une région corrigée de ladite image principale avec le reste de ladite image principale.

13. Appareil de traitement d'image comprenant :
a) des moyens (20) pour acquérir une image principale d'une scène ;
b) des moyens (130) pour déterminer une ou plusieurs régions faciales dans ladite image principale ;
c) des moyens (140) pour analyser lesdites une ou plusieurs régions faciales afin de déterminer si l'une quelconque desdites régions faciales comporte un défaut comprenant une partie de faible qualité de la région faciale de l'image ;
d) des moyens pour acquérir une séquence d'images de prévisualisation nominalement de ladite scène pendant une période de temps ne comprenant pas un temps pour acquérir ladite image principale ;
e) des moyens (130) pour déterminer un ou plusieurs ensembles de régions faciales dans ladite séquence d'images de prévisualisation ;
f) des moyens (140) pour analyser lesdits ensembles de régions faciales afin de déterminer si des régions faciales d'un ensemble correspondant à une région faciale défectueuse de ladite image principale comportent un défaut ;
**caractérisé par** :
g) des moyens (160) pour combiner des régions faciales exemptes de défaut dudit ensemble correspondant afin de fournir une région faciale exempte de défaut de haute qualité ; et
h) des moyens (90) pour corriger au moins une partie de toutes régions faciales défectueuses de ladite image principale avec des informations d'image à partir d'une région faciale exempte de défaut de haute qualité correspondante comprenant :
des moyens (150) pour appliquer un modèle comprenant une pluralité de sommets définissant une périphérie d'une région faciale à chaque région faciale exempte de défaut de haute qualité et une région faciale défectueuse correspondante ; et
des moyens pour mapper des pixels de ladite région faciale exempte de défaut de haute qualité à ladite région faciale défectueuse en fonction de la correspondance de sommets pour lesdites régions respectives.
